# FASCICULE DE BREVET EUROPEEN

(11) **EP 1 061 382 B1**
(45) Date de publication et mention de la délivrance du brevet: **24.03.2004**
(21) Numéro de dépôt: 00401536.8
(22) Date de dépôt: 31.05.2000
(51) Int. Cl.: G01V 1/18, G01C 9/12

(54) **Dispositif capteur d'ondes élastiques compensé électriquement des effets de l'inclinaison**
Sensor für elastische Wellen, elektrisch kompensiert für Neigungs-Effekte
Elastic-wave sensor electrically compensated for the effects of inclination

(30) Priorité: 07.06.1999 FR 9907242
(43) Date de publication de la demande: 20.12.2000
(73) Titulaire: Institut Français du Pétrole, 92852 Rueil-Malmaison Cedex (FR)
(72) Inventeur: Meynier, Patrick, 78400 Chatou (FR)

(56) Documents cités:
- FR-A- 2 247 703
- US-A- 3 878 504
- US-A- 4 525 819

## Description

La présente invention concerne un dispositif capteur d'ondes élastiques tel qu'un géophone, qui est compensé électriquement des effets d'une inclinaison et adapté de ce fait à fonctionner suivant des orientations (directions) différentes.

Les géophones sont conçus pour capter des vibrations de basse ou très basse fréquence. Ils comportent le plus couramment une bobine cylindrique mobile suspendue autour d'un aimant par des ressorts. La bobine oscille suivant un axe de part et d'autre d'une position d'équilibre définie par les ressorts. Les ressorts sont nécessairement très souples pour obtenir une fréquence de résonance très basse. Ils sont adaptés à fonctionner dans des positions où la bobine est soit verticale soit horizontale. Les ressorts sont étudiés pour compenser le poids de la bobine et la maintenir bien centrée autour de l'aimant. Les caractéristiques des ressorts sont différentes dans l'un et l'autre cas. La compensation n'est parfaite que pour une position de travail bien définie. Si on écarte le géophone de la position de travail pour laquelle il a été conçu, la bobine ne se trouve plus bien centrée autour de l'aimant et cela crée une augmentation de la distorsion harmonique. Le décentrement occasionné a pour effet de réduire la course maximale de la bobine autour de sa position de repos pour laquelle elle vient en butée et donc de réduire la dynamique de restitution du géophone.

Le déséquilibre est d'autant plus grand que le géophone est écarté de sa position de travail naturelle. Il est très gênant dans les applications où l'on contrôle mal l'attitude de travail du géophone, ce qui est le cas notamment dans les puits déviés. Une solution connue consiste à monter les géophones dans une suspension à double cardan et balourd maintenant le système oscillant dans sa position optimale quelle que soit l'orientation effective du boîtier. Cette solution est compliquée et donc onéreuse. Elle affecte la réponse du géophone dans la partie haute de la bande de fréquence sismique. Le géophone est encombrant et difficile à caser dans les espaces disponibles, généralement restreints.

Des exemples d'art antérieur dans le domaine des géophones à bobine mobile sont décrits par exemple dans les brevets suivants : US 4811 211, US 4 618 949, US 4 525 819.

Le dispositif capteur d'ondes élastiques (ondes sismiques ou acoustiques) selon l'invention est adapté à fonctionner dans des positions très éloignées de sa position naturelle de fonctionnement, pour laquelle il a été conçu, sans les inconvénients rappelés ci-dessus.

Il comporte un capteur électrodynamique comprenant un moyen pour engendrer un champ magnétique, une bobine mobile disposée dans le champ magnétique, et des ressorts adaptés à maintenir la bobine dans une position statique bien centrée quand son axe est parallèle à une direction de référence (horizontale ou verticale par exemple). Le dispositif est caractérisé en ce qu'il comporte des moyens d'application à la bobine d'un courant électrique adapté à corriger tout déséquilibre de la bobine par rapport à sa position statique causé par une inclinaison de l'axe de la bobine par rapport à la direction de référence.

Les moyens d'application comportent une source de courant continu et un moyen diviseur de tension dont le facteur de division dépend de l'angle entre l'axe du géophone et un axe de référence.

Le moyen diviseur comporte par exemple un potentiomètre dont le curseur est relié à un balourd.

Suivant un autre mode de réalisation, les moyens d'application comportent un analyseur de distorsion adapté à engendrer le courant électrique de correction propre à minimiser la distorsion.

D'autres caractéristiques et avantages du dispositif selon l'invention, apparaîtront à la lecture de la description ci-après d'exemples non limitatifs de réalisation, en se référant aux dessins annexés où :
- les Fig.1, 2 montrent schématiquement une structure classique de géophone électrodynamique ;
- la Fig.3 montre un premier mode de réalisation du dispositif avec un géophone tel que celui des Fig.1, 2 associé à des moyens de correction statique de décalage angulaire associé ; et
- la Fig.4 montre un autre mode de réalisation du dispositif où le géophone est associé à un analyseur de distorsion ;
- les Fig. 5A, 5B montrent à titre de référence, les réponses en fréquence et en phase d'un géophone adapté par construction à fonctionner avec l'axe de sa bobine parallèle à l'horizontale ;
- les Fig. 6A, 6B montrent les réponses en fréquence et en phase du même géophone perturbées par une inclinaison du géophone à 45° par rapport à l'horizontale ;
- les Fig. 7A, 7B montrent les réponses en fréquence et en phase du même géophone encore plus perturbées par un positionnement à la verticale (une inclinaison du géophone à 90° par rapport à l'horizontale) ; et
- les Fig.8A, 8B montrent la compensation parfaite que procure l'application d'une tension continue appropriée de compensation au même géophone utilisé à la verticale.

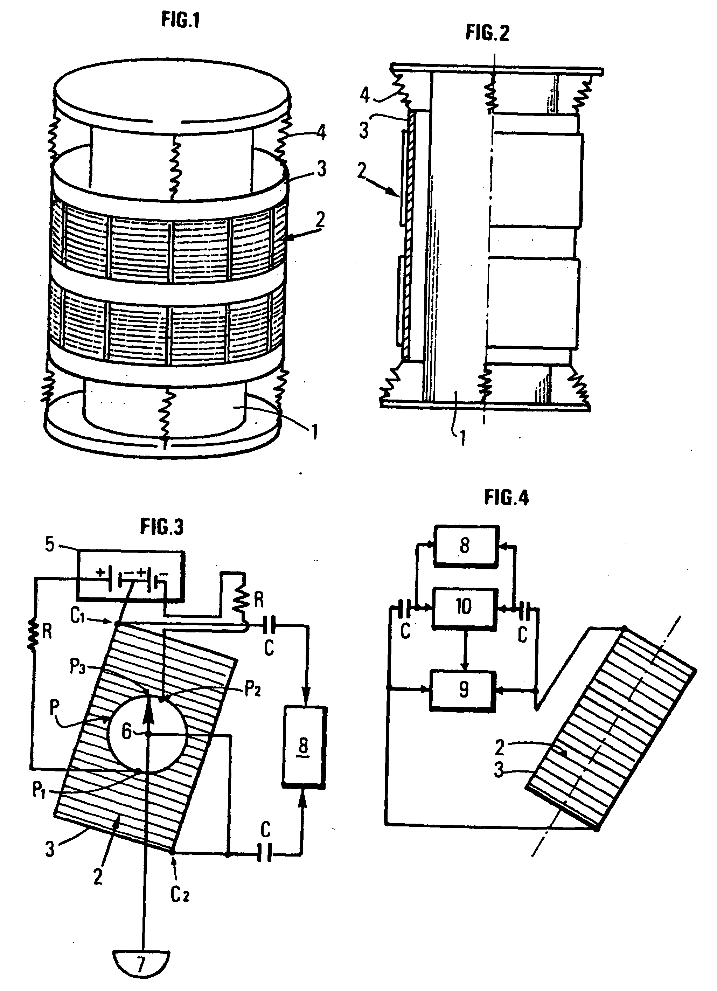

Le géophone G des Fig.1, 2 comporte classiquement dans un boîtier (non représenté) un aimant 1, une bobine 2 enroulée sur un support cylindrique 3 et des ressorts 4 (ici très schématisés) pour maintenir le support cylindrique 3 en équilibre statique dans une position bien centrée autour de l'aimant 1. Les ressorts 4 sont adaptés au mode de fonctionnement. Ils sont réglés différemment selon que le géophone est prévu pour fonctionner avec l'axe de la bobine dirigé horizontalement ou verticalement.

Suivant le mode de réalisation de la Fig.3, le dispositif comporte en combinaison avec un géophone G d'axe horizontal, une source de courant continu 5 avec un point milieu M connecté à une première borne c1 de la bobine 2, et deux bornes + et - respectivement connectées par une résistance R avec les bornes p1, p2 d'un potentiomètre P dont le corps est fixe par rapport au boîtier du géophone. Le point milieu p3 du potentiomètre P est connecté à l'autre borne c2 de la bobine 2 du géophone. L'axe 6 du potentiomètre P est relié mécaniquement à un élément 7 adapté à définir une direction de référence fixe, constitué par exemple d'un pendule vertical. Les deux bornes c1, c2 de la bobine du géophones sont connectées par l'intermédiaire de condensateurs de découplage C, avec un appareil 8 d'acquisition des signaux engendrés en réponse aux ondes reçues. Les points de connexion aux trois bornes p1 à p3 du potentiomètre sont choisis pour que la tension continue appliquée au géophone dans sa position normale de travail (l'horizontale pour le géophone de la Fig.3 par exemple) soit nulle et qu'elle augmente proportionnellement à l'inclinaison de l'axe par rapport à la direction de référence, jusqu'à un maximum de 90° en valeur absolue, avec inversion de la polarité de la tension appliquée selon que l'angle d'inclinaison est positif (sens trigonométrique) ou négatif par rapport à cette direction de référence.

Suivant un autre mode de réalisation, les bornes de la bobine 2 sont connectées directement aux bornes d'une source de tension d'amplitude et de polarité variable 9. Par l'intermédiaire de capacités de découplage C, ces mêmes bornes sont connectées d'une part comme précédemment à un dispositif 8 d'acquisition des signaux captés par le géophone, et d'autre part à un dispositif 10 adapté à mesurer la distorsion affectant les signaux captés et, si le niveau mesuré est supérieur à un seuil normal (correspondant aux spécifications), en raison d'une inclinaison de l'axe de la bobine par rapport à la direction de référence spécifiée, à commander l'application par la source 9 d'une tension continue propre à la minimiser.

Les fonctionnalités des dispositifs 8 et 10 (numérisation, mémorisation, mesures de distorsion, sélection de la tension à appliquer à la bobine) peuvent être remplies par exemple par un ordinateur muni de programmes appropriés.

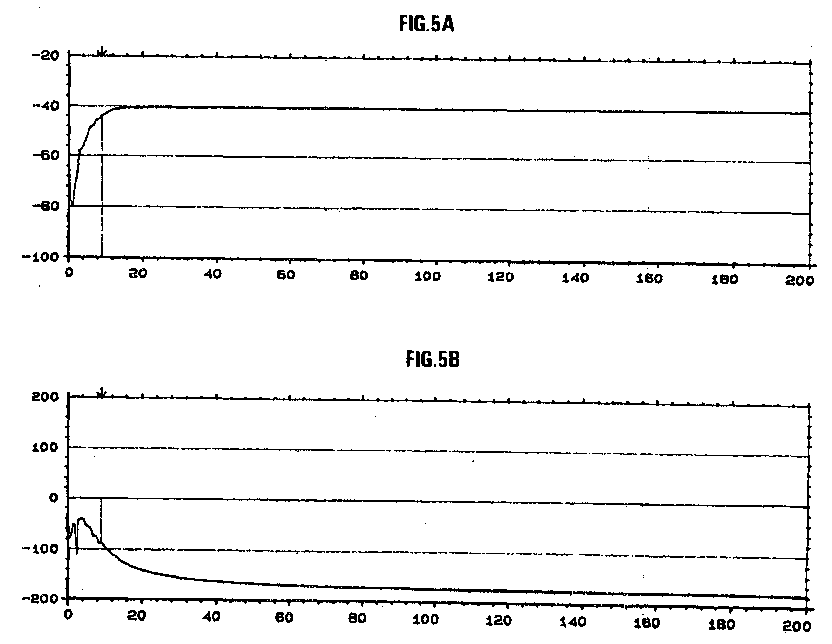

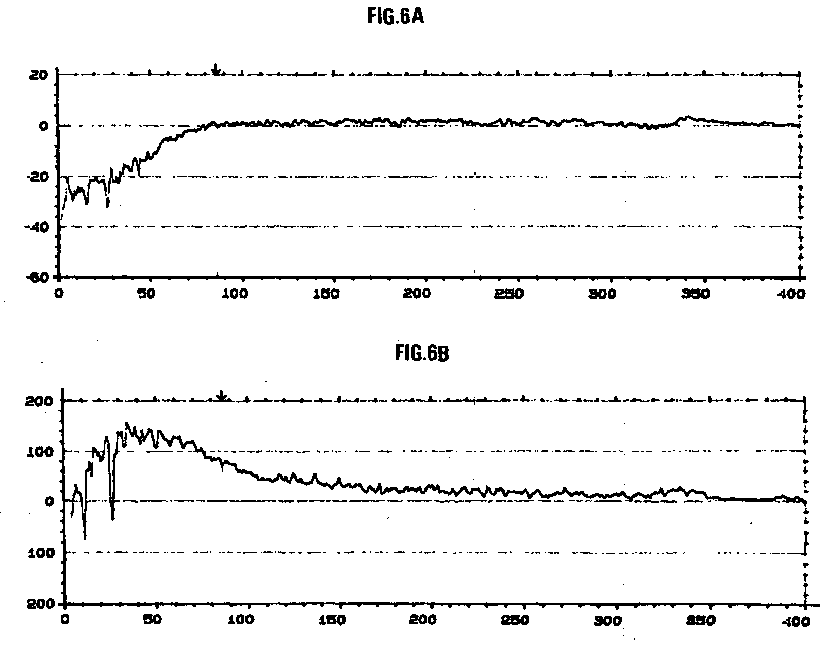

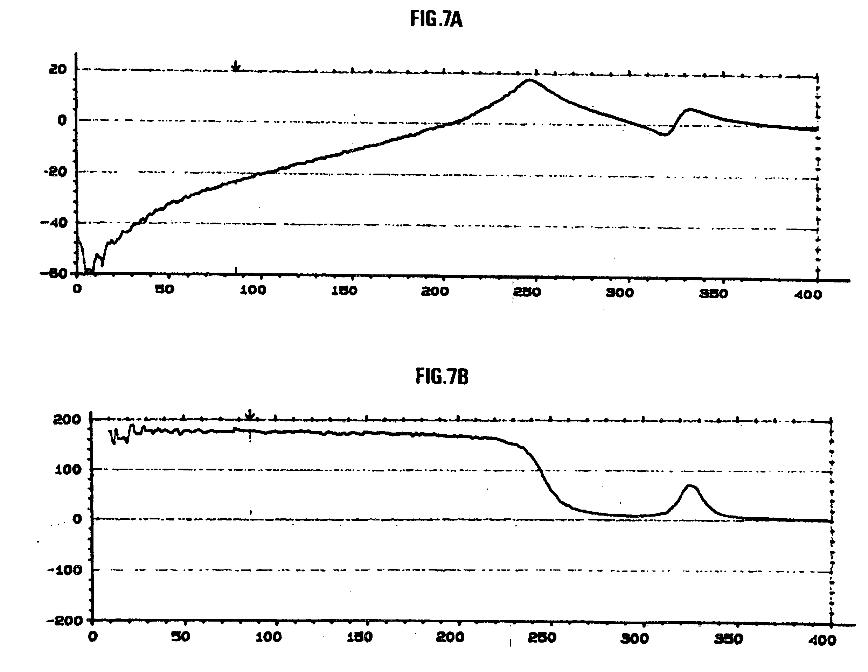

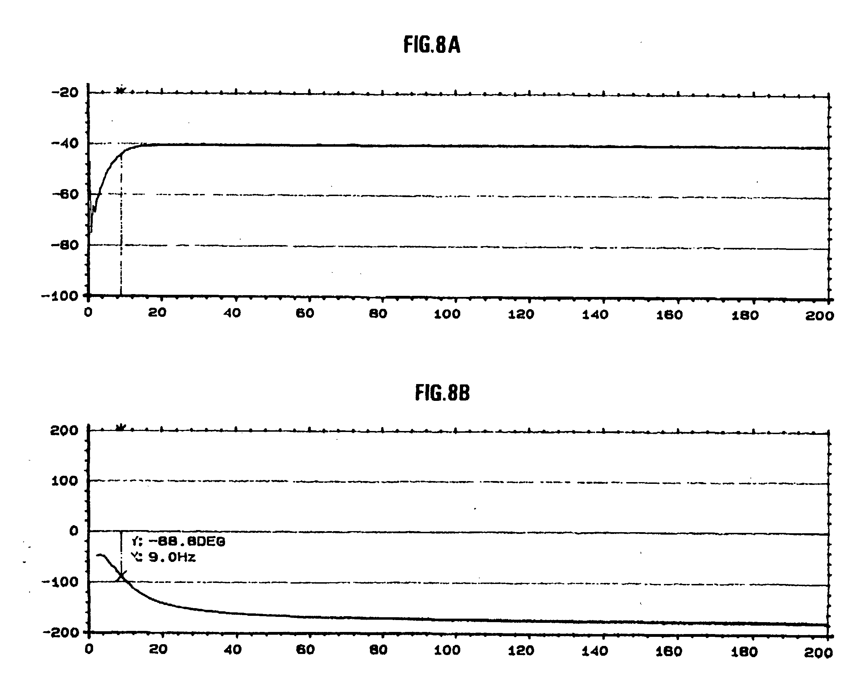

Les Fig.6A, 6B et 7A, 7B montrent les graves déformations de la réponse en fréquence et en phase d'un géophone d'autant plus graves que l'angle d'inclinaison par rapport à sa position naturelle de fonctionnement est important. La comparaison des figures 8A, 8B avec les figures 5A, 5B montre à l'évidence que l'application d'une tension de compensation appropriée à l'hydrophone, rétablit sensiblement les réponses notamment en fréquence et en phase.

Le dispositif selon l'invention trouve des applications notamment dans le domaine de la prospection sismique ou de la surveillance active ou passive de gisements souterrains. Pour ces applications, comme le montrent par exemple les brevets US 5,363,094, EP 0 748 457 (US 5,724,311), ou EP 0 921416, on est conduit à installer des ensembles souvent très importants de géophones dans des puits d'exploration et/ou de production, plus ou moins déviés par rapport à la verticale (éventuellement horizontaux dans certaines portions). Pour une meilleure discrimination des ondes élastiques renvoyées par des discontinuités du sous-sol, il est courant d'installer des géophones multi-composants (dits triphones) pour détecter les composantes des signaux reçus suivant trois axes orthogonaux. Le dispositif selon l'invention permet dans ce genre d'applications d'apporter la compensation exactement requise quelle que soit l'inclinaison effective du géophone à la profondeur d'utilisation.

Les fonctions de compensation de l'inclinaison des géophones et d'acquisition des signaux captés peuvent être réalisées en surface ou bien être partiellement réalisées par des modules locaux descendus dans les puits au voisinage des géophones.

On a décrit une application du dispositif dans des puits plus ou moins déviés. Il est bien évident que le dispositif peut être utilisé dans toutes les applications où son orientation effective en opération est difficilement contrôlable. C'est le cas notamment dans les applications où des capteurs sont descendus au fond d'une masse d'eau pour y être couplés avec les formations souterraines.

## Revendications

1. Dispositif capteur d'ondes élastiques comportant un capteur électrodynamique incluant un moyen (1) pour engendrer un champ magnétique, une bobine mobile (2) disposée dans le champ magnétique, et des ressorts (4) adaptés à maintenir la bobine dans une position statique bien centrée quand son axe est parallèle à une direction de référence, **caractérisé en ce qu'**il comporte des moyens d'application à la bobine d'un courant électrique adapté à corriger tout déséquilibre de la bobine par rapport à sa position statique causé par une inclinaison de l'axe de la bobine par rapport à la direction de référence.

2. Dispositif selon la revendication 1, **caractérisé en ce que** les moyens d'application comportent une source de courant continu (5) et un moyen diviseur de tension dont le facteur de division dépend de l'angle entre l'axe du géophone et la direction de référence.

3. Dispositif selon la revendication 2, **caractérisé en ce que** le moyen diviseur de tension comporte par exemple un potentiomètre (P) dont le curseur est relié mécaniquement à un élément (7) aligné en permanence sur la direction verticale.

4. Dispositif selon la revendication 1, **caractérisé en ce que** les moyens d'application comportent une source de tension variable (9) et un ensemble (10) adapté à mesurer la distorsion du géophone et à contrôler l'application par la source à la bobine (2) d'un courant électrique de correction propre à minimiser la distorsion.

5. Méthode de compensation des effets d'une inclinaison sur un capteur électrodynamique tel qu'un géophone incluant un moyen (1) pour engendrer un champ magnétique, une bobine mobile (2) disposée dans le champ magnétique, et des ressorts (4) de maintien de la bobine dans une position statique bien centrée quand son axe est parallèle à une direction de référence, **caractérisée en ce qu'**elle comporte l'application à la bobine mobile d'un courant électrique continu adapté à corriger tout déséquilibre de la bobine due à l'inclinaison de l'axe de la bobine par rapport à la direction de référence.

## Claims

1. Device for picking up elastic waves comprising an electrodynamic pickup including a means (1) for producing a magnetic field, a moving coil (2) disposed in the magnetic field, and springs (4) adapted to maintain the coil in a well centred static position when its axis is parallel to a reference direction, ***characterised in that*** it comprises means for applying to the coil an electric current adapted to correct any imbalance in the coil in relation to its static position caused by inclination of the axis of the coil in relation to the reference direction.

2. Device according to claim 1, ***characterised in that*** the means of application comprise a source of direct current (5) and a voltage dividing means the division factor of which depends on the angle between the axis of the geophone and the reference direction.

3. Device according to claim 2, ***characterised in that*** the voltage dividing means comprises for example a potentiometer (P) the cursor of which is connected mechanically to an element (7) permanently aligned in the vertical direction.

4. Device according to claim 1, ***characterised in that*** the means of application comprise a source of variable voltage (9) and a unit (10) adapted to measure the distortion of the geophone and to control the application by the source to the coil (2) of an appropriate corrective electric current to minimise the distortion.

5. Method for compensating for the effects of inclination on an electrodynamic pickup such as a geophone including a means (1) for producing a magnetic field, a moving coil (2) disposed in the magnetic field, and springs (4) for maintaining the coil in a well centred static position when its axis is parallel to a reference direction, ***characterised in that*** it comprises the application to the moving coil of a direct electric current adapted to correct any imbalance of the coil due to the inclination of the axis of the coil in relation to the reference direction.

## Patentansprüche

1. Sensorvorrichtung von elastischen Wellen, umfassend einen elektrodynamischen Sensor, der ein Mittel (1) zum Erzeugen eines Magnetfeldes, eine Tauchspule (2), die in dem Magnetfeld angeordnet ist, und Federn (4) einschließt, die ausgelegt sind, um die Spule in einer statischen Position zu halten, die gutzentriert ist, wenn deren Achse parallel zu einer Referenzrichtung ist, **dadurch gekennzeichnet, dass** sie Mittel zur Anwendung eines elektrischen Stroms auf die Spule umfasst, der ausgelegt ist, um jedes Ungleichgewicht der Spule im Verhältnis zu ihrer statischen Position, verursacht durch eine Neigung der Achse der Spule im Verhältnis zur Referenzrichtung zu korrigieren.

2. Vorrichtung nach Anspruch 1, **dadurch gekennzeichnet, dass** die Mittel zur Anwendung eine kontinuierliche Stromquelle (5) und ein Spannungsteilermittel umfassen, dessen Teilerfaktor vom Winkel zwischen der Achse des Geophons und der Referenzrichtung abhängt.

3. Vorrichtung nach Anspruch 2, **dadurch gekennzeichnet, dass** das Spannungsteilermittel z.B. ein Potentiometer (P) umfasst, dessen Anzeiger mechanisch mit einem Element (7) verbunden ist, das permanent auf der Vertikalrichtung ausgerichtet ist.

4. Vorrichtung nach Anspruch 1, **dadurch gekennzeichnet, dass** die Mittel zur Anwendung eine variable Spannungsquelle (9) und eine Anordnung (10) umfassen, die ausgelegt ist, um die Distorsion des Geophons zu messen und die Anwendung durch die Quelle von einem passenden elektrischen Korrekturstrom zum minimieren der Distorsion auf die Spule (2) zu regeln.

5. Verfahren zur Kompensierung der Wirkungen einer Neigung auf einem elektrodynamischen Sensor wie einem Geophon, das ein Mittel (1) zum Erzeugen eines Magnetfeldes, eine Tauchspule (2), die in dem Magnetfeld angeordnet ist, und Federn (4) zum Halten der Spule in einer statischen Position, die gut zentriert ist, wenn deren Achse parallel zu einer Referenzrichtung ist, **dadurch gekennzeichnet, dass** es die Anwendung eines kontinuierlichen elektrischen Stroms auf die Tauchspule umfasst, der ausgelegt ist, um jedes Ungleichgewicht der Spule aufgrund einer Neigung der Achse der Spule im Verhältnis zur Referenzrichtung zu korrigieren.
